# EUROPÄISCHE PATENTSCHRIFT

(11) **EP 0 899 225 B1**
(45) Veröffentlichungstag und Bekanntmachung des Hinweises auf die Patenterteilung: **17.12.2003**
(21) Anmeldenummer: 98114754.9
(22) Anmeldetag: 05.08.1998
(51) Int. Cl.: B65G 65/00, B65G 37/00

(54) **Verfahren und Einrichtung zum Umsetzen von Paletten auf einen Palettenträger und zum Entladen von Paletten von einem Palettenträger**
Method and device for transferring pallets to a pallet support and for discharging pallets from a pallet support
Procédé et dispositif pour transférer des palettes sur un support de palettes et pour décharger des palettes d'un support de palettes

(30) Priorität: 18.08.1997 DE 19735802
(43) Veröffentlichungstag der Anmeldung: 03.03.1999
(73) Patentinhaber: SIEMENS AKTIENGESELLSCHAFT, 80333 München (DE)
(72) Erfinder: Engelhardt, Alfred, 91241 Kirchensittenbach (DE)

(56) Entgegenhaltungen:
- US-A- 4 478 329
- US-A- 4 793 460

## Beschreibung

Die Erfindung bezieht sich zum einen auf ein Verfahren zum Umsetzen von Paletten auf einen Palettenträger, ferner auf ein Verfahren zum Entladen von Paletten von einem Palettenträger sowie auf eine Einrichtung zum Umsetzen von Paletten auf einen Palettenträger und auf eine Einrichtung zum Entladen von Paletten von einem Palettenträger

Derartige Verfahren und Einrichtungen sind beispielsweise aus R. Jünemann "Materialfluß und Logistik", Springer Verlag 1989, Seiten 670-671 bekannt. Dabei werden übliche Paletten, seien es Europaletten oder Industriepaletten, von einem Roboter auf einen Palettenwagen geladen oder von diesem entladen, wobei dieser Palettenwagen mit einem eigenen Antrieb und Teleskopkabeln ausgestattet sein kann, so daß der Palettenwagen unabhängig von den Fahrbewegungen des Roboters operieren und damit die Leistungsfähigkeit des Gesamtsystems nochmals steigern kann. Sowohl der Be- und Entladevorgang mittels eines Roboters wie auch die komplexe Ausbildung eines mit Teleskopkabeln ausgestatteten Palettenwagens führen dazu, daß das gesamte Automatisierungssystem technisch äußerst aufwendig ist.

Aufgabe der Erfindung ist es, Verfahren und Einrichtungen der eingangs genannten Art so auszubilden, daß in äußerst einfacher Weise das Be- und Entladen eines Palettenwagens ermöglicht wird.

Bezüglich eines Verfahrens zum Umsetzen von Paletten auf einen Palettenträger wird diese Aufgabe dadurch gelöst, daß jede Palette über ein erstes Fördermittel, das die Bodenbretter der Palette unterstützt, insbesondere ein Ketten- oder einen Rollenförderer, an den ein jeweils zu beladender Palettenträger herantransportiert wird, wobei dieser sich mit seiner Oberkante auf einem Niveau unterhalb der Palette befindet, daß der Palettenträger in seinem Boden Durchbrüche aufweist, durch die ein zweites Fördermittel vertikal auf das Palettenniveau verfahren wird, das insbesondere ebenfalls nach Art eines Ketten- oder Rollenförderers in dieser Position ebenfalls die Bodenbretter der Paletten unterstützend diese über den Palettenträger positioniert und dann soweit abgesenkt wird, daß die jeweilige Palette auf dem Palettenträger aufsitzt und daß das zweite Fördermittel außer Eingriff mit dem Palettenträger ist.

Gemäß der Erfindung wird die obige Aufgabe für ein Verfahren zum Entladen von Paletten von einem Palettenträger dadurch gelöst, daß ein jeweils zu entladender Palettenträger in seinem Boden Durchbrüche aufweist, durch die ein zweites Fördermittel nach Art eines Ketten- oder Rollenförderers gegen die Bodenbretter der jeweils zu entladenden Palette angreifend vertikal so verfahren wird, daß dabei die Palette auf ein Niveau über der Oberkante des Palettenträgers gebracht wird, auf der sich ein erstes, ebenfalls zur Abstützung der Bodenbretter der Palette geeignetes Fördermittel befindet, und daß dann die Palette vom zweiten auf das erste Fördermittel übergeben wird.

Gemäß der Erfindung wird die obige Aufgabe für eine Einrichtung zum Umsetzen und Entladen von Paletten mit einem ersten Fördermittel, insbesondere einem Ketten- oder einem Rollenförderer, das die Bodenbretter einer Palette unterstützen kann, und einem jeweils an das erste Fördermittel heran transportierbaren zu beladenden Plattenträger dadurch gelöst, dass der Palettenträger sich mit seiner Oberkante auf einem Niveau unterhalb des oberen Niveaus des ersten Fördermittels befindet und in seinem Boden Durchbrüche aufweist, durch die ein zweites Fördermittel vertikal auf das Niveau des ersten Fördermittels verfahrbar ist, wobei das zweite Fördermittel, insbesondere ebenfalls nach Art eines Ketten- oder Rollenförderers, in dieser Position ebenfalls die Bodenbretter der Paletten unterstützen und diese über den Palettenträger positionieren kann und dabei soweit absenkbar ist, dass die jeweilige Palette auf dem Palettenträger aufsitzen kann, und dass das zweite Fördermittel außer Eingriff mit dem Palettenträger ist.

Gemäß der Erfindung wird die obige Aufgabe für eine Einrichtung zum Entladen von Paletten von einem Palettenträger dadurch gelöst, daß ein jeweils zu entladender Palettenträger in seinem Boden Durchbrüche aufweist, durch die ein zweites Fördermittel nach Art eines Ketten- oder Rollenförderers gegen die Bodenbretter der jeweils zu entladenden Palette angreifend vertikal so verfahrbar ist, daß dabei die Palette auf ein Niveau über der Oberkante des Palettenträgers bringbar ist, auf der sich ein erstes, ebenfalls zur Abstützung der Bodenbretter der Palette geeignetes Fördermittel befindet, und daß dann die Palette vom zweiten auf das erste Fördermittel übergebbar ist.

Diese Einrichtungen können gemäß einer ersten vorteilhaften Ausbildung dadurch gekennzeichnet sein, daß Stränge des Ketten- oder Rollenförderers so angeordnet sind, daß die Raster der Bodenbretter unterschiedlicher Palettentypen bedienbar sind. Damit ist ein universeller Einsatz von beispielsweise Europaletten oder Industriepaletten in einem System der Lagertechnik ohne weiteres möglich.

Dadurch, daß der Palettenträger jeweils auf integrierten Rädern verfahrbar ist, wird für seine Fortbewegung ebenso wie beim eingangs genannten Stand der Technik keine diesbezügliche streckenseitige Fördertechnik erforderlich.

Dadurch, daß der Palettenträger zur gleichzeitigen Aufnahme von jeweils mindestens zwei Paletten ausgebildet ist, können größere Ladungseinheiten innerhalb des Systems zusammengestellt werden.

Ein Ausführungsbeispiel der Erfindung ist in der Zeichnung dargestellt und wird im folgenden näher erläutert. Dabei zeigen:
FIG 1 eine Seitenansicht und
FIG 2 eine Aufsicht.

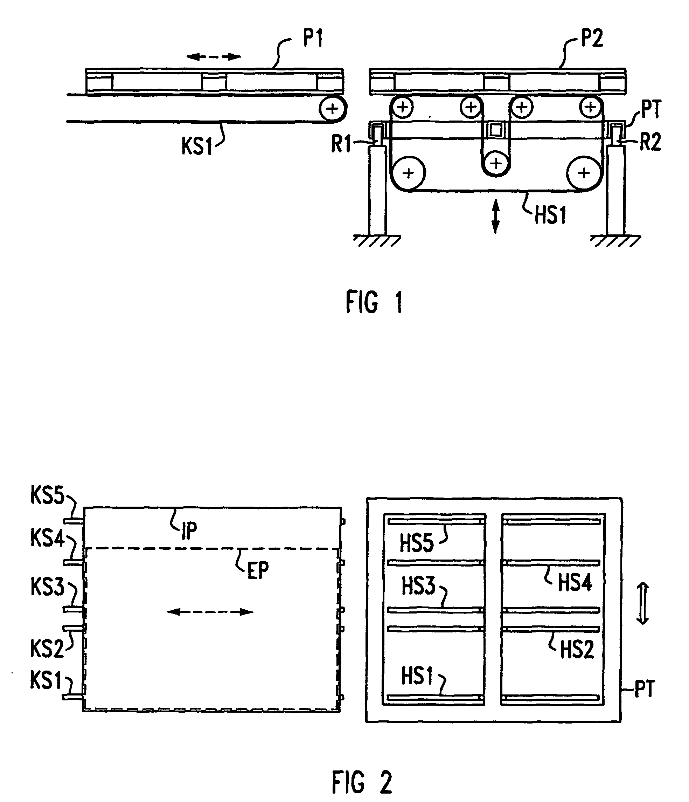

In der Darstellung gemäß FIG 1 ist angedeutet, daß eine Palette P1, sei es eine Europalette oder eine Industriepalette, auf einem ersten Fördermittel in diesem Fall einem Kettenförderer aufliegt. Dieser möge mehrere Kettenstränge aufweisen, die jeweils ein Bodenbrett des jeweiligen Palettentypes unterstützen. In der Darstellung ist dabei nur der Kettenstrang KS1 ersichtlich.

Durch das erste Fördermittel wird eine Transportbewegung für die Palette P1 in der durch einen gestrichelten Doppelpfeil angedeuteten Richtung ermöglicht. Am Ende des ersten Fördermittels befindet sich nun ein Hubkettenstrangförderer, von dem in der Darstellung der Hubkettenstrang HS1 gezeigt ist, der von mittels sieben der Übersichtlichkeit halber nicht einzeln bezeichneter Rollen eine U-Form aufspannt. Der Hubkettenstrang HS1 fluchtet mit dem Kettenstrang KS1. Der Hubkettenförderer weist ferner im gleichen Raster wie das erste Fördermittel weitere Hubkettenstränge auf, auf die im folgenden eingegangen wird. Der Hubkettenförderer kann in der durch einen Doppelpfeil angedeuteten Bewegungsrichtung verfahren werden.

Im Ausführungsbeispiel sei angenommen, daß der Hubkettenförderer sich in seiner oberen Arbeitslage befinden möge. Der Hubkettenförderer wird im weiteren als zweites Fördermittel bezeichnet. Wenn die oberen Niveaus des ersten und des zweiten Fördermittels korrespondiert, ist es möglich, daß ein Austausch von Paletten zwischen dem ersten und zweiten Fördermittel erfolgt. Im Ausführungsbeispiel sei angenommen, daß für den Beladevorgang eines Palettenträgers PT bereits eine Palette P2 vom ersten Fördermittel auf das zweite Fördermittel verbracht sei. Die Endposition der zweiten Palette P2 kann dabei auch der Übersichtlichkeit halber nicht weiter gezeigte Anschläge definiert sein.

Der Palettenträger PT ist mittels Rädern, von denen die Räder R1 und R2 gezeigt sind, verfahrbar, sobald das zweite Fördermittel soweit abgesenkt worden ist, daß es sich unterhalb des Palettenträgers PT befindet. Mit diesem Absenkvorgang wird auch die Palette P2 auf den Palettenträger PT aufgesetzt.

In der Darstellung gemäß FIG 2 ist in Aufsicht gezeigt, wie eine Industriepalette oder eine gestrichelt angedeutete Europalette auf Kettensträngen KS1 bis KS5 des ersten Fördermittels aufliegt. Dabei würden Kettenstränge KS1, KS2 und KS4 eine Europalette EP unter ihren Bodenbrettern abstützen, während Kettenstränge KS1, KS3 und KS5 eine Industriepalette IP unter deren Bodenbrettern abstützen würden. Entsprechend der Lage der Kettenstränge KS1 bis KS5 des ersten Fördermittels sind selbstverständlich auch Hubkettenstränge HS1 bis HS5 des zweiten Fördermittels ausgebildet.

Damit der Durchgriff in vertikaler Richtung für die zweiten Fördermittel durch den Palettenträger PT gegeben ist, kann dieser nach Art einer digitalen Acht aus Stahlkastenprofil konstruiert sein. Anschläge zum Fixieren der Lage der Paletten sind der Übersichtlichkeit halber nicht dargestellt. Die mögliche Verfahrrichtung des Palettenträgers PT ist in der Darstellung durch einen offen Doppelpfeil angedeutet.

Selbstverständlich können auch in Verfahrrichtung verlängerte Palettenträger verwendet werden, die beispielsweise die doppelte Länge des dargestellten Palettenträgers PT aufweisen mögen, damit auch die Aufnahme von zwei Industriepaletten ermöglicht ist. Anstelle von Kettenfördertechnik kann durchaus eine dementsprechende Rollenfördertechnik zum Einsatz kommen.

Der geschilderte Beladevorgang ist ohne weiteres reversiv für das Entladen. So kann mit dem Palettenträger eine Palette über das zweite Fördermittel gefahren werden, dort wird dessen Vertikalbewegung ausgelöst, bis das Niveau des ersten Fördermittels erreicht ist und dann erfolgt die Übergabe der zu entladenden Palette vom zweiten Fördermittel auf das erste Fördermittel.

## Patentansprüche

1. Verfahren zum Umsetzen von Paletten auf einen Palettenträger, **dadurch gekennzeichnet, daß** jede Palette (P1,P2,EP,IP) über ein erstes Fördermittel (KS1 bis KS6), das die Bodenbretter der Palette (P1,P2,EP,IP) unterstützt, insbesondere einen Ketten- oder einen Rollenförderer, an den ein jeweils zu beladender Palettenträger (PT) herantransportiert wird, wobei dieser sich mit seiner Oberkante auf einem Niveau unterhalb der Palette (P1,P2,EP,IP) befindet, daß der Palettenträger (PT) in seinem Boden Durchbrüche aufweist, durch die ein zweites Fördermittel (HS1 bis HS5) vertikal auf das Palettenniveau verfahren wird, das insbesondere ebenfalls nach Art eines Ketten- oder Rollenförderers in dieser Position ebenfalls die Bodenbretter der Paletten (P1,P2,EP,IP) unterstützend diese über den Palettenträger (PT) positioniert und dann soweit abgesenkt wird, daß die jeweilige Palette (P1,P2,EP,IP) auf dem Palettenträger (PT) aufsitzt und daß das zweite Fördermittel (HS1 bis HS5) außer Eingriff mit dem Palettenträger (PT) ist.

2. Verfahren zum Entladen von Paletten von einen Palettenträger, **dadurch gekennzeichnet, daß** ein jeweils zu entladender Palettenträger (PT) in seinem Boden Durchbrüche aufweist, durch die ein zweites Fördermittel (HS1 bis HS5) nach Art eines Ketten- oder Rollenförderers gegen die Bodenbretter der jeweils zu entladenden Palette (P1, P2,EP,IP) angreifend vertikal so verfahren wird, daß dabei die Palette (P1,P2,EP,IP) auf ein Niveau über der Oberkante des Palettenträgers (PT) gebracht wird, auf der sich ein erstes, ebenfalls zur Abstützung der Bodenbretter der Palette (P1,P2,EP,IP) geeignetes Fördermittel (KS1 bis KS5) befindet, und daß dann die Palette (P1,P2,EP,IP) vom zweiten auf das erste Fördermittel (HS1 bis HS5) übergeben wird.

3. Einrichtung zum Umsetzen und Entladen von Paletten mit einem ersten Fördermittel (KS1 bis KS5), insbesondere einem Ketten- oder einem Rollenförderer, das die Bodenbretter einer Palette (P1,P2,EP,IP) unterstützen kann, und einem jeweils an das erste Fördermittel heran transportierbaren zu beladenden Plattenträger (PT),
**dadurch gekennzeichnet,**
**dass** der Palettenträger sich mit seiner Oberkante auf einem Niveau unterhalb des oberen Niveaus des ersten Fördermittels befindet und in seinem Boden Durchbrüche aufweist, durch die ein zweites Fördermittel (HS1 bis HS5) vertikal auf das Niveau des ersten Fördermittels verfahrbar ist, wobei das zweite Fördermittel, insbesondere ebenfalls nach Art eines Ketten- oder Rollenförderers, in dieser Position ebenfalls die Bodenbretter der Paletten (P1,P2,EP,IP) unterstützen und diese über den Palettenträger (PT) positionieren kann und dabei soweit absenkbar ist, dass die jeweilige Palette (P1,P2,EP,IP) auf dem Palettenträger (PT) aufsitzen kann, und dass das zweite Fördermittel (HS1 bis HS5) außer Eingriff mit dem Palettenträger (PT) ist.

4. Einrichtung nach Anspruch 3, **dadurch gekennzeichnet, daß** Stränge des Ketten- oder Rollenförderers so angeordnet sind, daß die Raster der Bodenbretter unterschiedlicher Palettentypen (EP,IP) bedienbar sind.

5. Einrichtung nach Anspruch 3 oder 4, **dadurch gekennzeichnet, daß** der Palettentäger (PT) jeweils auf integrierten Rädern (R1,R2) verfahrbar ist.

6. Einrichtung nach Anspruch 3, 4 oder 5, **dadurch gekennzeichnet, daß** der Palettenträger (PT) zur gleichzeitigen Aufnahme von jeweils mindestens zwei Paletten (P1,P2,EP,IP) ausgebildet ist.

## Claims

1. Method of transferring pallets onto a pallet carrier, **characterized in that** each pallet (P1,P2,EP,IP) is transported via a first conveying means (KS1 to KS6), which supports the base boards of the pallet (P1,P2,EP,IP), in particular a chain conveyor or a roller conveyor, up to a pallet carrier (PT) which is to be loaded in each case, this pallet carrier having its top edge located on a level beneath the pallet (P1,P2,EP,IP), **in that** the base of the pallet carrier (PT) contains through-passages through which is displaced vertically to the pallet level a second conveying means (HS1 to HS5) which, in particular likewise in the manner of a chain conveyor or roller conveyor, likewise supporting the base boards of the pallets (P1,P2,EP,IP) in this position, positions said pallets over the pallet carrier (PT) and then is lowered to the extent where the respective pallet (P1,P2,EP,IP) is seated on the pallet carrier (PT), and the second conveying means (HS1 to HS5) is disengaged from the pallet carrier (PT).

2. Method of unloading pallets from a pallet carrier, **characterized in that** the base of a pallet carrier (PT) which is to be unloaded in each case contains through-passages through which a second conveying means (HS1 to HS5), in the manner of a chain conveyor or roller conveyor, is displaced vertically, with action against the base boards of the pallet (P1,P2,EP,IP) which is to be unloaded in each case, such that the pallet (P1,P2,EP,IP) here is moved to a level above the top edge of the pallet carrier (PT), on which is located a first conveying means (KS1 to KS5), which is likewise suitable for supporting the base boards of the pallet (P1,P2,EP,IP), and **in that** the pallet (P1,P2,EP,IP) is then transferred from the second conveying means to the first conveying means (HS1 to HS5).

3. Apparatus for transferring and unloading pallets, having a first conveying means (KS1 to KS5), in particular a chain conveyor or a roller conveyor, which can support the base boards of a pallet (P1,P2,EP,IP), and having a pallet carrier (PT) which is to be loaded and can be transported up to the first conveying means in each case, **characterized in that** the pallet carrier has its top edge located on a level beneath the top level of the first conveying means, and its base contains through-passages through which a second conveying means (HS1 to HS5) can be displaced vertically to the level of the first conveying means, it being the case that the second conveying means, in particular likewise in the manner of a chain conveyor or roller conveyor, can likewise support the base boards of the pallets (P1,P2,EP,IP) in this position and can position said pallets above the pallet carrier (PT) and can be lowered to the extent where the respective pallet (P1,P2,EP,IP) can be seated on the pallet carrier (PT), and the second conveying means (HS1 to HS5) is disengaged from the pallet carrier (PT).

4. Apparatus according to Claim 3, **characterized in that** lengths of the chain conveyor or roller conveyor are arranged such that it is possible to serve the grid arrangements of the base boards of different types of pallet (EP,IP).

5. Apparatus according to Claim 3 or 4, **characterized in that** the pallet carrier (PT) can be displaced on integrated wheels (R1, R2) in each case.

6. Apparatus according to Claim 3, 4 or 5, **characterized in that** the pallet carrier (PT) is designed for simultaneously receiving in each case at least two pallets (P1,P2,EP,IP).

## Revendications

1. Procédé de transfert de palettes sur un support de palette, **caractérisé en ce que** l'on transporte chaque palette (P1, P2, EP, IP) par un premier moyen (KS1 à KS6) de transport qui supporte les planches de fond de la palette (P1, P2, EP, IP), notamment un convoyeur à chaîne ou un convoyeur à rouleau, sur le support (PT) de palette à charger respectivement, le bord supérieur de celui-ci se trouvant à un niveau inférieur à la palette (P1, P2, EP, IP), **en ce que** le fond du support (PT) de palette a des traversées par lesquelles un deuxième moyen (HS1 à HS5) de transport est amené verticalement au niveau des palettes qui, notamment également à la manière d'un convoyeur à chaîne ou d'un convoyeur à rouleau, en soutenant dans cette position également les planches de fond des palettes (P1, P2, EP, IP), est mis en position au-dessus du support (PT) de palette, puis est abaissé jusqu'à ce que la palette (P1, P2, EP, IP) respective repose sur le support (PT) de palette et jusqu'à ce que le deuxième moyen (HS1 à HS5) de transport soit hors de prise du support (PT) de palette.

2. Procédé de déchargement de palettes d'un support de palette, **caractérisé en ce que** le fond d'un support (PT) de palette à décharger a des traversées par lesquelles un deuxième moyen (HS1 à HS5) de convoyage est déplacé verticalement à la manière d'un convoyeur à chaîne ou d'un convoyeur à rouleau en attaquant les planches de fond de la palette (P1, P2, EP, IP) respective à décharger, **en ce que** l'on met la palette (P1, P2, EP, IP) à un niveau au-dessus du bord supérieur du support (PT) de palette sur lequel se trouve un premier moyen (KS1 à KS5) de transport également approprié pour supporter les planches de fond des palettes (P1, P2, EP, IP) et **en ce qu'**ensuite on fait passer la palette (P1, P2, EP, IP) du deuxième au premier moyen (HS1 à HS5) de transport.

3. Dispositif de transfert et de déchargement de palettes, comprenant un premier moyen (KS1 à KS5) de transport, notamment un convoyeur à chaîne ou un convoyeur à rouleau, qui peut soutenir les planches de fond d'une palette (P1, P2, EP, IP) et un support (PT) de palette à charger pouvant être transporté respectivement vers le premier moyen de transport,
**caractérisé en ce que** le bord supérieur du support de palette se trouve à un niveau inférieur au niveau supérieur du premier moyen de transport, son fond a des traversées par lesquelles un deuxième moyen (HS1 à HS5) de transport peut être déplacé verticalement pour être amené au niveau du premier moyen de transport, le deuxième moyen de transport pouvant notamment également à la manière d'un convoyeur à chaîne ou d'un convoyeur à rouleau soutenir dans cette position également les planches de fond des palettes (P1, P2, EP, IP) et peut mettre celles-ci en position au-dessus du support (PT) de palette et ensuite être abaissé jusqu'à ce que la palette (P1, P2, EP, IP) respective puisse reposer sur le support (PT) de palette, et **en ce que** le deuxième moyen (HS1 à HS5) de transport est mis hors de prise du support (PT) de palette.

4. Dispositif suivant la revendication 3, **caractérisé en ce que** les brins du convoyeur à chaîne ou du convoyeur à rouleau sont disposés de manière à ce que les trames des planches de fond de type (EP, IP) différent de palette puissent être desservies.

5. Dispositif suivant la revendication 3 ou 4, **caractérisé en ce que** le support (PT) de palette est mobile respectivement sur des roues (R1, R2) intégrées.

6. Dispositif suivant les revendications 3, 4 ou 5, **caractérisé en ce que** le support (PT) de palette est constitué pour recevoir en même temps respectivement au moins deux palettes (P1, P2, EP, IP).
